# EUROPEAN PATENT APPLICATION

(11) **EP 2 849 246 A1**
(43) Date of publication of application: **18.03.2015**
(21) Application number: 13788573.7
(22) Date of filing: 07.05.2013
(51) Int. Cl.: H01M 2/02, H01M 2/30

(54) **BATTERY PACK HAVING AMORPHOUS STRUCTURE**

(30) Priority: 07.05.2012 KR 20120047863
(71) Applicant: LG Chem, Ltd., Youngdungpo-gu Seoul 150-721 (KR)
(72) Inventor: KANG, Kyoung Won, Daejeon 302-280 (KR); JUNG, Hyun Chul, Daejeon 305-509 (KR); KIM, Ki Woong, Daejeon 305-762 (KR); KWON, Sungjin, Daejeon 302-828 (KR)
(74) Representative: Hoffmann Eitle
(86) International application number: PCT/KR2013/003983
(87) International publication number: WO 2013/168980

(57) **Abstract**

Disclosed herein is a battery cell configured to have a structure in which an electrode assembly, including cathodes, anodes, and separators disposed respectively between the cathodes and the anodes, is mounted in a battery case and in which a cathode terminal and an anode terminal protrude from a first outer circumference of the battery case and a second outer circumference of the battery case opposite to the first outer circumference of the battery case is curved when viewed from above.

## Description

### [TECHNICAL FIELD]

The present invention relates to a battery pack of an irregular structure and, more particularly, to a battery cell configured to have a structure in which an electrode assembly, including cathodes, anodes, and separators disposed respectively between the cathodes and the anodes, is mounted in a battery case and in which a cathode terminal and an anode terminal protrude from a first outer circumference of the battery case and a second outer circumference of the battery case opposite to the first outer circumference of the battery case is curved when viewed from above.

### [BACKGROUND ART]

As mobile devices have been increasingly developed, and the demand for such mobile devices has increased, the demand for secondary batteries has also sharply increased. Among such secondary batteries is a lithium secondary battery exhibiting high energy density and operating voltage and excellent charge retention and service-life characteristics, which has been widely used as an energy source for various electronic products as well as mobile devices.

Based on the appearance thereof, a lithium secondary battery may be classified as a cylindrical battery, a prismatic battery, or a pouch-shaped battery. Based on the type of an electrolyte, a lithium secondary battery may be also classified as a lithium ion battery, a lithium ion polymer battery, or a lithium polymer battery.

A recent trend in the miniaturization of mobile devices has increased the demand for a prismatic battery or a pouch-shaped battery, which has a small thickness. In particular, much interest is currently focused on such a pouch-shaped battery because it is easy to modify the shape of the pouch-shaped battery, the manufacturing cost of the pouch-shaped battery is low, and the pouch-shaped battery is lightweight.

In general, a pouch-shaped battery is a battery having an electrode assembly and an electrolyte in a pouch-shaped battery case, made of a laminate sheet including a resin layer and a metal layer, in a sealed state. The electrode assembly mounted in the battery case is configured to have a jelly-roll (wound) type structure, a stacked type structure, or a combination (stacked/folded) type structure.

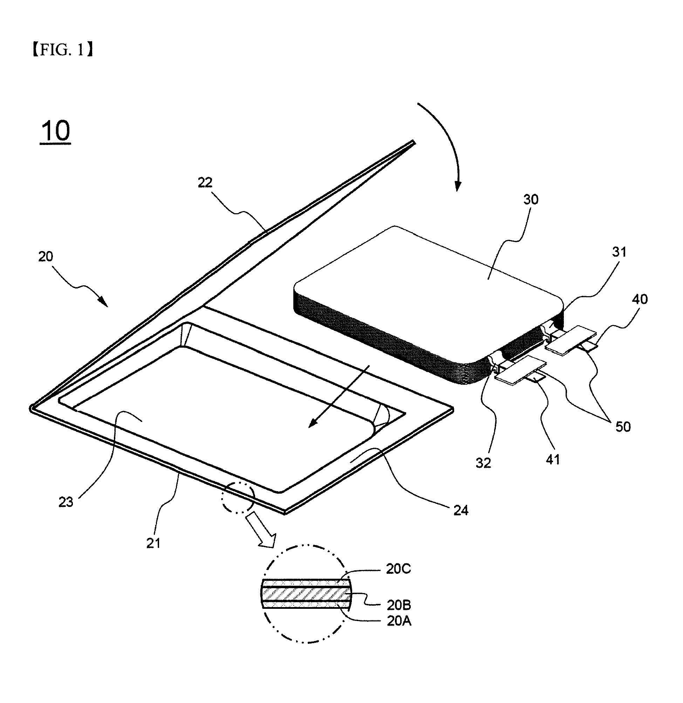

FIG. 1 is a view typically showing the structure of a pouch-shaped secondary battery including a stacked type electrode assembly.

Referring to FIG. 1, a pouch-shaped secondary battery 10 is configured to have a structure in which an electrode assembly 30, including cathodes, anodes, and separators disposed respectively between the cathodes and the anodes, is mounted in a pouch-shaped battery case 20 in a sealed state such that two electrode leads 40 and 41 electrically connected to cathode and anode tabs 31 and 32 of the electrode assembly 30 are exposed to the outside.

The battery case 20 includes a case body 21 having a depressed receiving part 23, in which the electrode assembly 30 is located, and a cover 22 integrally connected to the case body 21.

The battery case 20 is made of a laminate sheet including an outer resin layer 20A constituting the outermost portion of the laminate sheet, an isolation metal layer 20B preventing penetration of materials, and an inner resin layer 20C for sealing.

The cathode tabs 31 and the anode tabs 32 of the stacked type electrode assembly 30 are respectively coupled to the electrode leads 40 and 41 by welding. In addition, insulative films 50 are attached to the top and bottom of each of the electrode leads 40 and 41 to prevent the occurrence of a short circuit between a thermal welding device (not shown) and the electrode leads 40 and 41 and to secure sealing between the electrode leads 40 and 41 and the battery case 20 when the upper end 24 of the case body 21 and the upper end of the cover 22 are thermally welded to each other using the thermal welding device.

In recent years, however, a new type of battery cell is required in accordance with a trend change for a slim type design or various other designs.

In addition, the above-mentioned battery cells are configured to have the same size or the same capacity to constitute a battery pack. For this reason, in order to manufacture a lightweight and thin battery pack in consideration of the design of a device, to which the battery pack is applied, it is necessary to reduce the capacity of the battery pack or modify the design of the device such that the size of the device is increased. Furthermore, electrical connection is complicated during modification of the design of the device with the result that it is difficult to manufacture a battery pack satisfying desired conditions.

Therefore, there is a high necessity for a battery cell that can be used depending upon the shape of a device, to which a battery pack is applied, while maintaining the capacity of the battery pack, and a battery pack including the same.

### [DISCLOSURE]

### [TECHNICAL PROBLEM]

Therefore, the present invention has been made to solve the above problems, and other technical problems that have yet to be resolved.

Specifically, it is an object of the present invention to provide a battery cell configured to have a structure in which the battery cell can be mounted in various spaces of a device, whereby it is possible to maximally utilize an internal space of the device, and the battery cell can be efficiently mounted in various structures of the device in addition to a rectangular structure of the device.

### [TECHNICAL SOLUTION]

In accordance with one aspect of the present invention, the above and other objects can be accomplished by the provision of a battery cell configured to have a structure in which an electrode assembly, including cathodes, anodes, and separators disposed respectively between the cathodes and the anodes, is mounted in a battery case and in which a cathode terminal and an anode terminal protrude from a first outer circumference of the battery case and a second outer circumference of the battery case opposite to the first outer circumference of the battery case is curved when viewed from above.

The battery cell according to the present invention is based on the specific structure as described above. Consequently, it is possible to manufacture battery cells having various capacities and sizes based on the battery cell according to the present invention. In addition, the battery cell according to the present invention may be mounted in various spaces of a device in which the battery cell is mounted. Consequently, it is possible to maximally utilize an internal space of the device. Furthermore, the battery cell according to the present invention may be mounted even in a space in which it is difficult to mount a conventional battery cell as well as a narrow and small space. Consequently, it is possible to design various types of devices.

In a concrete example, the first outer circumference of the battery case may be linear. In addition, the second outer circumference of the battery case may be formed in the shape of an arc having a central point directed to the first outer circumference of the battery case. In this case, the second outer circumference of the battery case opposite to the first outer circumference of the battery case may be convex outward with the result that the battery case may have a semicircular structure.

In general, most mobile devices, such as a mobile phone, a personal digital assistant (PDA), and an MP3 player, are configured to have a rectangular structure and a battery cell mounted in each of the devices is also configured to have a rectangular structure. In recent years, however, specially designed products, products for children, or ergonomic products have been developed and, for this reason, devices having various structures other than the rectangular structure have been placed on the market. In a case in which the battery cell having the rectangular structure is mounted in the devices having various structures as described above, however, it is not possible to efficiently use an internal space of each of the devices.

In particular, for a device, at least one side of which is curved, it is difficult to secure a battery cell installation space. As a result, a small-sized batter cell having a low capacity is mounted in the device or the size of the device is increased.

The battery cell according to the present invention is configured to have a structure in which one side of the battery cell is curved to solve the above problem. Consequently, it is possible to efficiently use an internal space of a device, to mount a battery cell having a high capacity in the device, and to miniaturize the device.

Specifically, the arc forming the curved shape of the second outer circumference of the battery case may have a radius equivalent to 50% or more the length of the first outer circumference of the battery case. More specifically, the arc may have a radius equivalent to 50 to 300% the length of the first outer circumference of the battery case.

The electrode assembly received in the battery case of the battery cell may be configured to have a structure corresponding to the external shape of the battery cell. For example, the outer circumference of the electrode assembly corresponding to the curved second outer circumference of the battery case may be curved in the same shape as the second outer circumference of the battery case.

The battery cell may be a lithium ion battery or a lithium ion polymer battery. However, the present invention is not limited thereto.

In addition, the battery cell may be a thin battery generally having a small thickness. For example, the battery cell may be a prismatic battery or a pouch-shaped battery. The battery case may be made of, for example, a laminate sheet including a metal layer and a resin layer. A representative example of the battery cell may be a pouch-shaped battery including a battery case made of a laminate sheet including aluminum and resin.

The pouch-shaped battery may be configured to have a structure in which an electrode assembly including cathodes, anodes, and separators disposed respectively between the cathodes and the anodes is mounted in a battery case in a state in which the electrode assembly is connected to electrode terminals protruding outward from the battery case. For example, the metal layer may be made of an aluminum material.

In a concrete example, the electrode assembly may be configured to have a structure in which electrode groups having different planar sizes are stacked such that the electrode groups can be charged and discharged. Specifically, the electrode groups may be stacked on the plane in a height direction and the battery case may be configured to have a structure corresponding to the stacked electrode groups. This structure improves utilization of a surplus space of the device and increased the capacity of the battery.

The electrode assembly is not particularly restricted so long as the electrode assembly constitutes a cathode and an anode. For example, electrode assembly may be configured to have a stacked type structure or a stacked/folded type structure. The details of the stacked/folded type electrode assembly are disclosed in Korean Patent Application Publication No. 2001-0082058, No. 2001-0082059, and No. 2001-0082060, which have been filed in the name of the applicant of the present patent application. The disclosures of the applications are incorporated herein by reference.

In the electrode assembly according to the present invention, the outermost electrodes may have the same polarity or different polarities.

In a concrete example, the electrode groups may be stacked type electrode groups or stacked/folded type electrode groups configured to have a structure in which the outermost electrodes have the same polarity in a state in which the electrode groups are stacked. Specifically, in the stacked type electrode groups or the stacked/folded type electrode groups, the uppermost electrode and the lowermost electrode of the cathode/separator/anode stacked structure may be anodes.

Meanwhile, in the stacked structure, it is difficult to accurately achieve alignment of the electrodes which are arranged in the vertical direction, whereby it is hard to manufacture a reliable and high-quality electrode assembly.

In order to solve the above problem, the electrode groups may be configured to have a laminated and stacked type structure. In the laminated and stacked type structure, one or more radical cells, each of which is configured to have a structure in which an anode, a separator, a cathode, and a separator are sequentially stacked or a structure in which a cathode, a separator, an anode, and a separator are sequentially stacked, are stacked. Consequently, it is possible to form the electrode groups using a process of simply stacking the radical cells without using a process of folding full cells or bi-cells to manufacture the electrode assembly, thereby simplifying the electrode assembly manufacturing process.

In the electrode assembly, a radical final cell, which is configured to have a structure in which a separator, an anode, and a separator are sequentially stacked, may be disposed at the upper end of a structure in which a plurality of radical cells is stacked.

In the battery cell according to the present invention, a combination of two or more selected from among the stacked type structure, the stacked/folded type structure, and the laminated and stacked type structure may be mounted although the electrode groups may be configured to have the stacked type structure, the stacked/folded type structure, or the laminated and stacked type structure as described above.

The electrode groups may be stacked such that electrode terminals of the electrode groups are arranged in the same direction. Consequently, the cathode terminals and the anode terminals arranged in the same direction may be connected to each other.

In this case, the electrode groups may be stacked to have a structure in which sides of the electrode groups from which the electrode terminals of the electrode groups protrude are adjacent to each other in the vertical direction such that the electrode terminals can be easily connected to each other.

The electrode groups may have the same size. Alternatively, at least two of the electrode groups may have different sizes. However, the size and shape of each of the electrode groups are not particularly restricted. For example, stacked two electrode groups may be different from each other in at least one selected from among a thickness, a breadth (horizontal length), and a width (vertical length).

The battery case may be a battery case made of a laminate sheet including a resin layer and a metal layer or a metal can.

The metal can type battery case may be made of a metal material or a plastic material. The pouch-shaped battery case may be made of a laminate sheet including a resin layer and a metal layer.

The battery case made of the laminate sheet or the metal can type battery case may be provided with a receiving part in which the electrode assembly having the specific structure according to the present invention is mounted. The receiving part may have a stepped structure with a width and height corresponding to the shape of the electrode assembly having the specific structure according to the present invention.

For example, in a case in which the battery case is a battery case made of a laminate sheet, the battery case made of the laminate sheet may include an upper case and a lower case and the upper case and the lower case may be provided with receiving parts corresponding to the stacked structure of the electrode groups such that the upper case and the lower case are coupled to each other to receive the stacked electrode groups in a sealed space between the upper case and the lower case.

In accordance with another aspect of the present invention, there is provided a method of manufacturing the battery cell with the above-stated construction.

A preferred example of the method of manufacturing the battery cell may include coating opposite side regions (an upper coated portion and a lower coated portion) of a metal sheet having a large length to width ratio excluding a middle region (an uncoated portion) with electrode mixtures comprising electrode active materials in a longitudinal direction, cutting electrode plates from the metal sheet such that electrode tabs are made from the uncoated portion and electrode bodies are made from the upper coated portion and the lower coated portion, and stacking the electrode plates to form an electrode assembly.

The electrode plates may be cut from the metal sheet using various methods. For example, the electrode plates may be cut from the metal sheet by punching. Alternatively, the electrode plates may be cut from the metal sheet by notching.

In a preferred example, the electrode plates may be cut from the metal sheet such that the width of the uncoated portion is less than the sum of the length of an electrode tab of each upper electrode plate and the length of an electrode tab of each lower electrode plate. That is, the electrode plates may be cut from the metal sheet in a state in which electrode tabs of the upper electrode plates and the lower electrode plates located at the uncoated portion are alternately arranged. Consequently, it is possible to more efficiently use the metal sheet, thereby reducing manufacturing cost.

In accordance with another aspect of the present invention, there is provided a device including the battery cell with the above-stated construction as a power source. For example, the device may be selected from among a mobile phone, a PDA, a smart phone, and an MP3 player.

In accordance with a further aspect of the present invention, there is provided a battery pack including two or more battery cells, each of which is configured to have a structure as described above, connected in series and/or in parallel to each other as unit batteries. The battery pack may be used in a device selected from among a mobile phone, a portable computer, a smart phone, a tablet PC, a smart pad, a netbook computer, a light electronic vehicle (LEV), an electric vehicle, a hybrid electric vehicle, a plug-in hybrid electric vehicle, and a power storage device.

The structure of the device and a method of manufacturing the device are well known in the art to which the present invention pertains and, therefore, a detailed description thereof will be omitted.

### [BRIEF DESCRIPTION OF DRAWINGS]

The above and other objects, features and other advantages of the present invention will be more clearly understood from the following detailed description taken in conjunction with the accompanying drawings, in which:
FIG. 1 is a perspective view showing a conventional battery cell;
FIG. 2 is a plan view showing a battery cell according to an embodiment of the present invention;
FIG. 3 is a sectional view showing the battery cell of FIG. 2;
FIGS. 4 to 6 are typical views showing a process of manufacturing an electrode assembly which will be received in the battery cell of FIG. 2;
FIG. 7 is a sectional view showing a battery cell according to another embodiment of the present invention;
FIG. 8 is a sectional view showing a battery cell according to another embodiment of the present invention;
FIG. 9 is a vertical sectional view showing a battery cell according to a further embodiment of the present invention;
FIG. 10 is a vertical sectional view showing a radical cell constituting a laminated and stacked type electrode assembly; and
FIG. 11 is a vertical sectional view showing a laminated and stacked type electrode assembly.

### [BEST MODE]

Now, exemplary embodiments of the present invention will be described in detail with reference to the accompanying drawings. It should be noted, however, that the scope of the present invention is not limited by the illustrated embodiments.

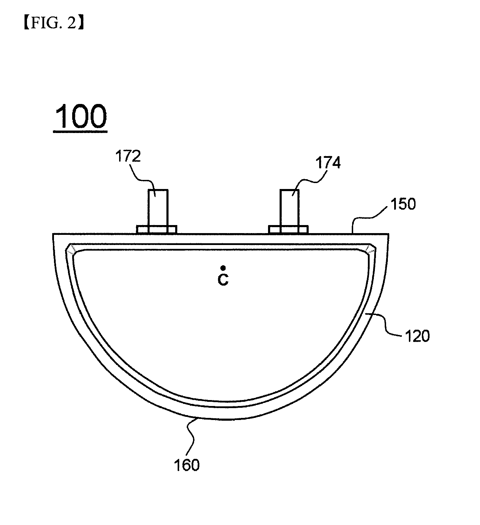

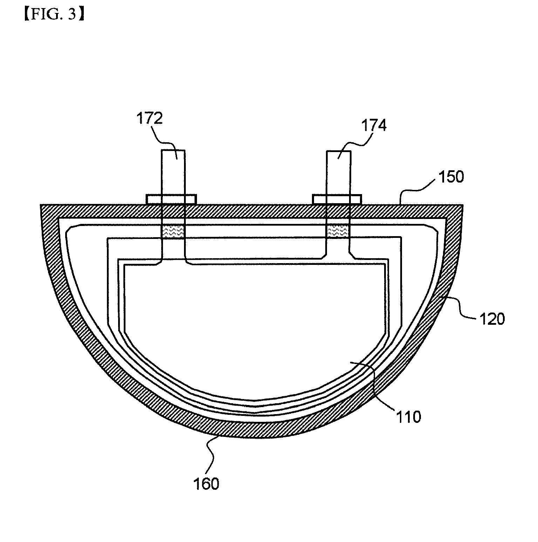

FIG. 2 is a plan view showing a battery cell according to an embodiment of the present invention and FIG. 3 is a sectional view showing the battery cell of FIG. 2.

Referring to these drawings, a battery cell 100 is configured to have a structure in which an electrode assembly 110, including cathodes, anodes, and separators disposed respectively between the cathodes and the anodes, is mounted in a plate-shaped battery case 120. Specifically, the electrode assembly 110, which is configured to have a structure in which cathode plates and anode plates are stacked in a state in which separators are disposed respectively between the cathode plates and the anode plates, is received in the battery case 120, which is made of a laminate sheet including a metal layer and a resin layer. The battery cell 100 is configured to have a structure in which a cathode terminal 172 and an anode terminal 174 protrude from a first outer circumference 150 of the battery case 120 and a second outer circumference 160 of the battery case 120 opposite to the first outer circumference 150 of the battery case 120 is curved when viewed from above.

Specifically, the first outer circumference 150 of the battery case 120 is linear and the second outer circumference 160 of the battery case 120 is configured to have a structure in which the central point C of the second outer circumference 160 of the battery case 120 is directed to the first outer circumference 150 of the battery case 120. That is, the second outer circumference 160 of the battery case 120 is convex outward.

For a device configured to have a structure in which at least one side of the device is curved, therefore, the battery cell 100, one side of which is curved, may be mounted in the device without waste of an internal space of the device, whereby it is possible to achieve miniaturization of the device.

In addition, a portion of the outer circumference of the electrode assembly 110 is curved to correspond to the second outer circumference 160 of the battery case 120. Consequently, the size of the electrode assembly 110 that can be loaded in the battery case 120 is maximized, whereby it is possible to reduce loss of battery capacity due to the curved structure of the battery cell 100.

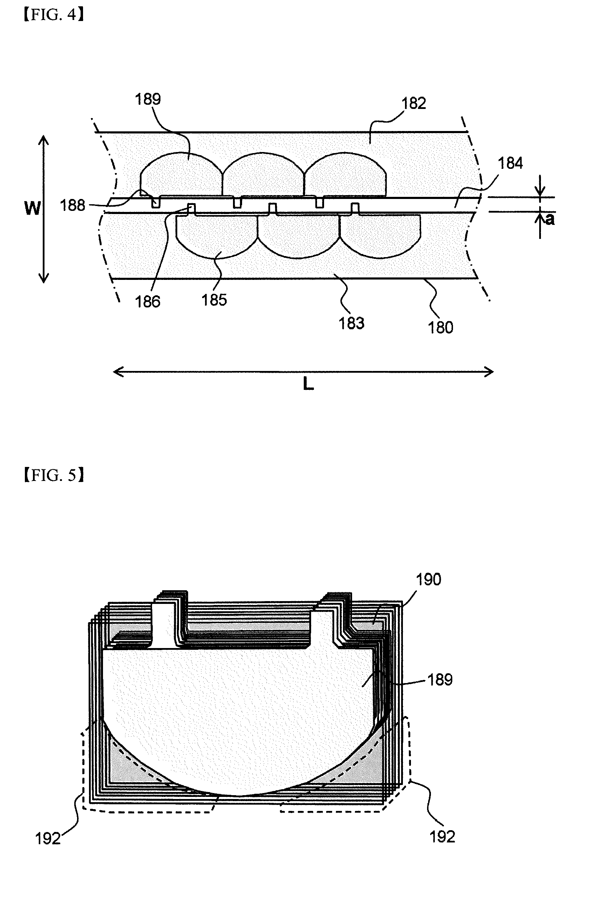

FIGS. 4 to 6 are typical views showing a process of manufacturing an electrode assembly which will be received in the battery cell of FIG. 2.

Referring to these drawings together with FIG. 3, electrode mixtures including electrode active materials are applied to an upper coated portion 182 and a lower coated portion 183 of a metal sheet 180 having a large length L to width W ratio excluding a middle uncoated portion 184. At this time, portions at which electrode tabs 188 of electrode plates 189 will be formed are located at the uncoated portion 184 such that the electrode mixtures cannot be applied to the electrode tabs 188.

In addition, upper electrode plates 189 and lower electrode plates 185 are cut in a state in which electrode tabs 186 and 188 of the upper electrode plates 189 and the lower electrode plates 185 are alternately arranged such that a width a of the uncoated portion 184 is less than the sum of the length of the electrode tab 188 of each upper electrode plate 189 and the length of the electrode tab 186 of each lower electrode plate 185. Consequently, it is possible to more efficiently use the metal sheet 180.

The electrode plates 189 are cut by punching or notching such that one side of each electrode plate 189 opposite to the other side of each electrode plate 189 at which the electrode tab 188 is located is curved. According to circumstances, the electrode plates 189 may be cut using a laser.

Subsequently, the electrode plates 189 are stacked in a state in which separators 190 are disposed between the respective electrode plates 189 and then surplus portions 192 of the separators 190 are removed to manufacture an electrode assembly 110.

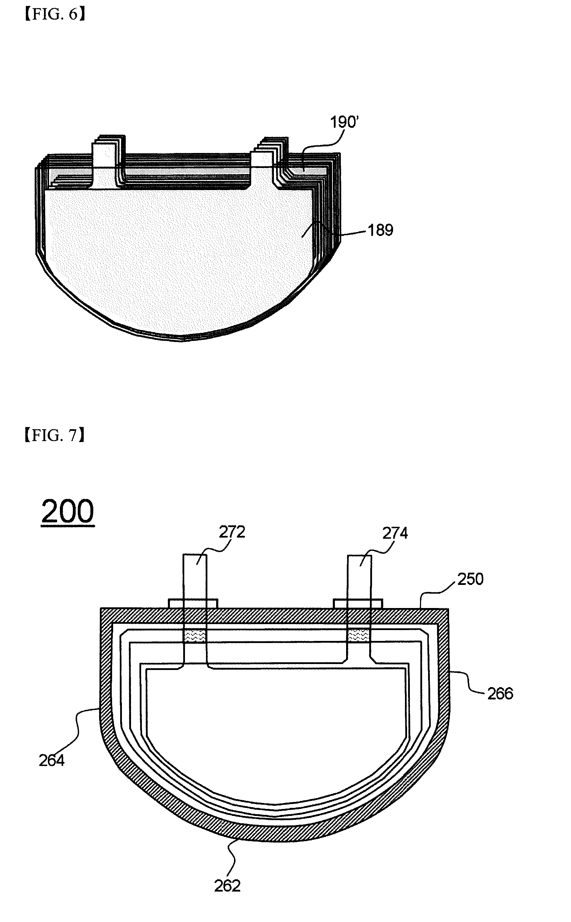

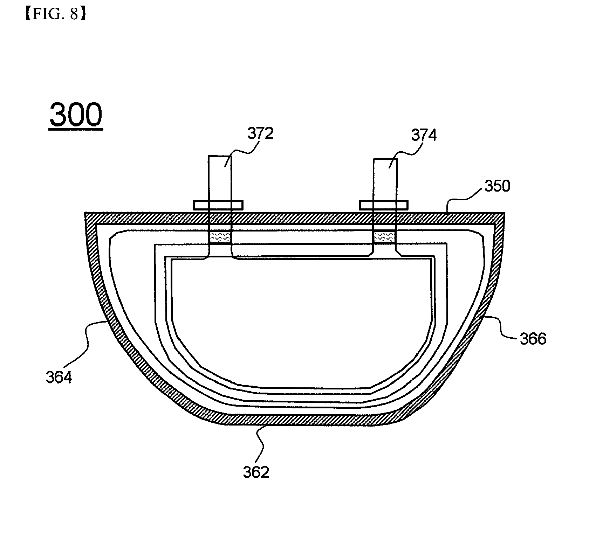

FIGS. 7 and 8 are sectional views showing battery cells according to other embodiments of the present invention.

Referring first to FIG. 7, a battery cell 200 is configured to have a structure in which a cathode terminal 272 and an anode terminal 274 protrude from a first outer circumference 250 of a battery case, which is linear, and the other outer circumference of the battery case, excluding the first outer circumference 250 of the battery case, includes opposite sides 264 and 266, which are linear, and a lower part 262, which is curved. In addition, referring to FIG. 8, a battery cell 300 is configured to have a structure in which a cathode terminal 372 and an anode terminal 374 protrude from a first outer circumference 350 of a battery case, which is linear, and the other outer circumference of the battery case, excluding the first outer circumference 350 of the battery case, includes opposite sides 264 and 266, which are curved, and a lower part 362, which is linear.

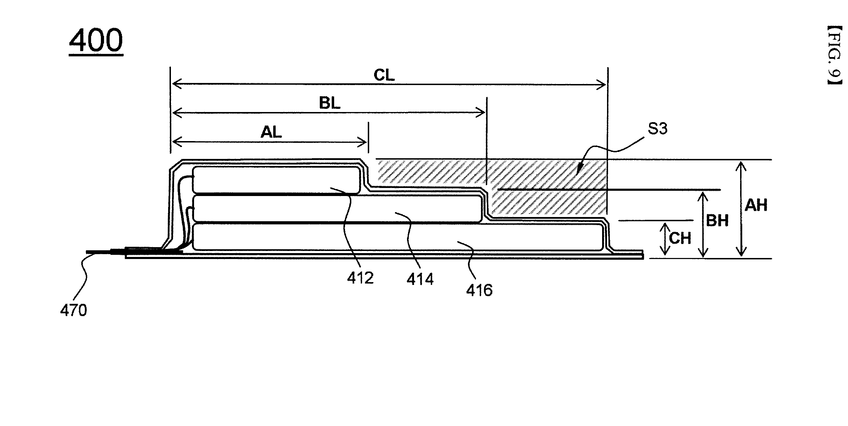

FIG. 9 is a vertical sectional view showing a battery cell according to a further embodiment of the present invention.

FIG. 9 shows a structure in which three electrode groups having different sizes are stacked. Alternatively, two electrode groups having different sizes may be stacked or four electrode groups having different sizes may be stacked.

Referring to FIG. 9, a battery cell 400 is configured to have a structure in which electrode groups 412, 414, and 416 having different lengths AL, BL, and CL and different capacities are mounted in a battery case 420 in a state in which the electrode groups 412, 414, and 416 are vertically stacked. In addition, the electrode groups 412, 414, and 416 are vertically stacked such that the thickness of the electrode groups 412, 414, and 416 increases toward electrode terminals 470 protruding outward from the battery case 420.

The electrode groups 412, 414, and 416 are stacked such that the electrode terminals of the electrode groups 412, 414, and 416 are arranged in the same direction. The electrode terminals of the electrode groups 412, 414, and 416 are connected to one another. The electrode groups 412, 414, and 416 are stacked such that sides of the electrode groups 412, 414, and 416 from which the electrode terminals of the electrode groups 412, 414, and 416 protrude are adjacent to one another in the vertical direction. Consequently, the electrode terminals of the electrode groups 412, 414, and 416 can be easily coupled to one another.

In addition, the battery case 420 is provided with a receiving part formed in a shape including a stepped structure corresponding to the stacked structure of the electrode groups 412, 414, and 416.

Meanwhile, the capacities of the electrode groups 412, 414, and 416 are proportional to the product of the lengths AL, BL, and CL, heights AH-BH, BH-CH, and CH, and widths (not shown) of the respective electrode groups 412, 414, and 416.

In such a unique structure of the battery cell 400, a spare space S3 is defined at the right upper end of the battery cell 400 due to the electrode groups 412, 414, and 416 having different sizes. The spare space is inversely proportional to the lengths, the heights, and the widths of the electrode groups 412, 414, and 416.

The spare space is provided to cope with conditions, such as an irregular inner space or interference with other parts, of a device to which the battery cell is applied. A thickness increase direction and a degree of stack thickness increase may also be flexibly changed in design based on applied conditions.

For example, the battery cell may be configured to have a structure in which steps are formed at opposite sides of the battery case in addition to the structure in which the steps are formed at one side of the battery case as shown in FIG. 9.

Alternatively, two electrode assemblies, each of which has steps formed at one side thereof, are received in one battery case such that the steps are formed at opposite sides of the battery case.

In addition, for a battery case which includes an upper case and a lower case and in which the upper case covers the lower case to seal the battery case, the upper case and the lower case may be provided with receiving parts having different sizes and electrode assemblies or electrode groups having different sizes are mounted in the receiving parts of the upper and lower cases such that the steps are formed at the battery case.

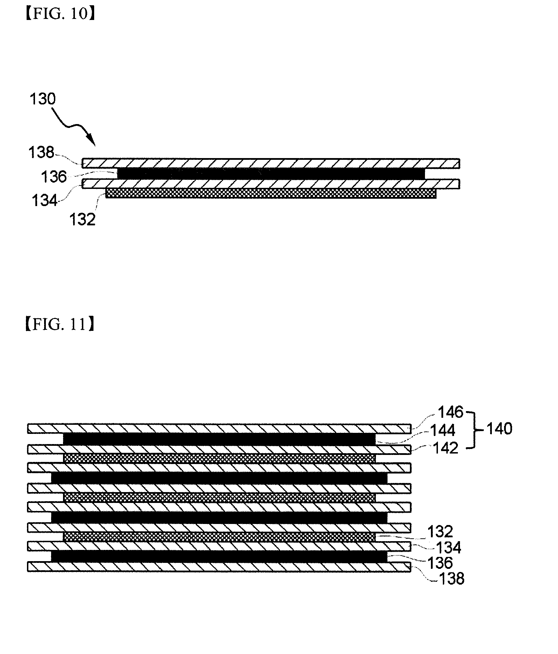

FIG. 10 is a vertical sectional view showing a radical cell constituting a laminated and stacked type electrode assembly and FIG. 11 is a vertical sectional view showing a laminated and stacked type electrode assembly.

Referring to FIGS. 10 and 11, a radical cell 130 is configured to have a structure in which an anode 132, a separator 134, a cathode 136, and a separator 138 are sequentially stacked and laminated. A radical final cell 140, which is configured to have a structure in which a separator 142, an anode 144, and a separator 146 are stacked, is stacked on the uppermost end of a structure in which a plurality of radical cells 130 is stacked. Consequently, it is possible to manufacture a more stable and reliable electrode assembly due to stacking of the radical final cell 140. Stacking of the radical cell 130 and the radical final cell 140 may prevent misalignment of the electrode assembly and remove necessity for processing equipment (several laminators and folding apparatuses). Consequently, it is possible to form a radical cell using a single laminator and to manufacture an electrode assembly by simple stacking.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

### [INDUSTRIAL APPLICABILITY]

As is apparent from the above description, a battery cell according to the present invention is configured to have a structure in which one side of the battery cell is curved, whereby it is possible to easily secure a battery cell installation space, to maximally utilize an internal space of a device, to mount a battery cell having a high capacity in the device, and to more miniaturize the device.

In addition, the battery cell according to the present invention is configured to have a structure in which electrode plates or unit cells having different sizes are stacked, whereby it is possible to maximally utilize an internal space of a device in which the battery cell is mounted.

## Claims

1. A battery cell configured to have a structure in which an electrode assembly, comprising cathodes, anodes, and separators disposed respectively between the cathodes and the anodes, is mounted in a battery case and in which a cathode terminal and an anode terminal protrude from a first outer circumference of the battery case and a second outer circumference of the battery case opposite to the first outer circumference of the battery case is curved, when viewed from above.

2. The battery cell according to claim 1, wherein the first outer circumference of the battery case is linear.

3. The battery cell according to claim 1, wherein the second outer circumference of the battery case is formed in the shape of an arc having a central point directed to the first outer circumference of the battery case.

4. The battery cell according to claim 3, wherein the arc has a radius equivalent to 50 to 300% a length of the first outer circumference of the battery case.

5. The battery cell according to claim 1, wherein an outer circumference of the electrode assembly corresponding to the second outer circumference of the battery case is curved in the same shape as the second outer circumference of the battery case.

6. The battery cell according to claim 1, wherein the battery cell is a lithium ion battery or a lithium ion polymer battery.

7. The battery cell according to claim 1, wherein the electrode assembly is configured to have a structure in which two or more electrode groups having different planar sizes are stacked.

8. The battery cell according to claim 7, wherein the electrode groups are stacked type electrode groups or stacked/folded type electrode groups.

9. The battery cell according to claim 8, wherein each of the stacked type electrode groups comprises a first unit cell configured to have a structure in which any one selected from between a cathode and an anode constitutes an outermost portion and cathodes, anodes, and separators are laminated in a state in which the cathodes, the anodes, and the separators are stacked such that any one selected from between an outermost cathode and an outermost anode is disposed between the separators.

10. The battery cell according to claim 9, wherein each of the stacked type electrode groups comprises a second unit cell configured to have a structure in which separators constitute outermost portions and cathodes, anodes, and separators are laminated in a state in which the cathodes, the anodes, and the separators are stacked such that any one selected from between a cathode and an anode is disposed between the separators.

11. The battery cell according to claim 8, wherein an electrode constituting the outermost portion is an anode.

12. The battery cell according to claim 7, wherein the electrode groups are stacked such that electrode terminals of the electrode groups are arranged in the same direction.

13. The battery cell according to claim 12, wherein the electrode groups are configured to have a structure in which sides of the electrode groups from which the electrode terminals of the electrode groups protrude are adjacent to each other in a vertical direction.

14. The battery cell according to claim 7, wherein at least two of the electrode groups are different from each other in at least one selected from among a thickness, a breadth (horizontal length), and a width (vertical length).

15. The battery cell according to claim 1, wherein the battery case is a battery case made of a laminate sheet comprising a resin layer and a metal layer or a metal can.

16. The battery cell according to claim 15, wherein the battery case made of the laminate sheet or the metal can is provided with a receiving part having a stepped structure in width and height.

17. The battery cell according to claim 16, wherein the battery case made of the laminate sheet comprises an upper case and a lower case, and wherein the upper case and the lower case are provided with receiving parts corresponding to a stacked structure of electrode assemblies such that the upper case and the lower case are coupled to each other to receive the stacked electrode assemblies in a sealed space between the upper case and the lower case.

18. A method of manufacturing a battery cell according to any one of claims 1 to 17, the method comprising:
(a) coating opposite side regions (an upper coated portion and a lower coated portion) of a metal sheet having a large length to width ratio excluding a middle region (an uncoated portion) with electrode mixtures comprising electrode active materials in a longitudinal direction;
(b) cutting electrode plates from the metal sheet such that electrode tabs are made from the uncoated portion and electrode bodies are made from the upper coated portion and the lower coated portion; and
(c) stacking the electrode plates to form an electrode assembly.

19. The method according to claim 18, wherein the electrode plates are cut from the metal sheet by notching.

20. The method according to claim 18, wherein the electrode plates are cut from the metal sheet by punching.

21. The method according to claim 18, wherein the electrode plates are cut from the metal sheet such that a width of the uncoated portion is less than the sum of a length of an electrode tab of each upper electrode plate and a length of an electrode tab of each lower electrode plate.

22. A device comprising a battery cell according to claim 1 or 17 as a power source.

23. The device according to claim 22, wherein the device is selected from among a mobile phone, a personal digital assistant (PDA), a smart phone, and an MP3 player.

24. A device having a battery pack comprising a battery cell according to claim 1 or 17 as a unit battery mounted therein, wherein the battery cell comprises two or more battery cells.

25. The device according to claim 24, wherein the device is selected from among a mobile phone, a portable computer, a smart phone, a tablet PC, a smart pad, a netbook computer, a light electronic vehicle (LEV), an electric vehicle, a hybrid electric vehicle, a plug-in hybrid electric vehicle, and a power storage device.
